# FASCICULE DE BREVET EUROPEEN

(11) **EP 3 390 147 B1**
(45) Date de publication et mention de la délivrance du brevet: **18.08.2021**
(21) Numéro de dépôt: 16822146.3
(22) Date de dépôt: 16.12.2016
(51) Int. Cl.: B60N 2/28

(54) **NACELLE POUR ENFANT PRÉSENTANT UNE ARMATURE INTERNE À STRUCTURE ASYMÉTRIQUE**
WIEGE FÜR KINDER MIT EINEM INNEREN RAHMEN MIT EINER ASYMMETRISCHEN STRUKTUR
CRADLE FOR CHILDREN HAVING AN INNER FRAME WITH AN ASYMMETRICAL STRUCTURE

(30) Priorité: 17.12.2015 FR 1562704
(43) Date de publication de la demande: 24.10.2018
(73) Titulaire: Dorel France, 49309 Cholet (FR)
(72) Inventeur: PASQUIER, Nicolas, 49700 Doue La Fontaine (FR); PORMENTE, Sylvaine, 49610 Juigne Sur Loire (FR)
(74) Mandataire: Vidon Brevets & Stratégie
(86) Numéro de dépôt international: PCT/EP2016/081447
(87) Numéro de publication internationale: WO 2017/103122

(56) Documents cités:
- EP-A1- 1 225 087
- EP-A2- 2 298 619
- DE-U1-202004 008 567
- FR-A1- 2 736 609
- US-A- 3 596 986
- US-A1- 2014 292 049

## Description

### 1. Domaine de l'invention

Le domaine de l'invention est celui de la puériculture, et plus précisément du transport des enfants en bas âge ou des nourrissons. Plus précisément encore, l'invention concerne les nacelles, ou couffins, permettant le transport en position allongée des enfants entre 0 et 6 mois environ (enfants appartenant au groupe 0).

Plus particulièrement, l'invention concerne les nacelles de transport pour enfant destinées à être mises en œuvre dans un véhicule.

### 2. L'art antérieur

On connaît dans l'art antérieur des nacelles destinées à être placées dans des véhicules automobiles et permettant le transport d'enfants de la naissance à 10kg environ. Ces nacelles permettent de transporter confortablement, dans un véhicule automobile, l'enfant en position allongée afin de préserver la qualité de son sommeil, de lui offrir une plus grande liberté de mouvement que dans un siège auto, et de lui offrir la position la plus adaptée à son dos fragile.

De telles nacelles sont connues. Elles présentent généralement une coque rigide, recouverte d'une garniture ou au fond de laquelle est placé un matelas, sur lequel l'enfant peut reposer.

Des moyens de solidarisation réversibles à un châssis de voiture d'enfant, ou à un autre moyen de support, peuvent être prévus. Il peut notamment s'agir de moyens mis en œuvre par le demandeur, et connus sous la marque Moduloclip®.

Lorsqu'elles sont utilisées dans un véhicule, ces nacelles doivent être convenablement arrimées dans le véhicule pour éviter que la nacelle ne bascule, en cas de choc ou de coup de frein brusque, ou ne soit projetée dans l'habitacle du véhicule.

Ces nacelles comprennent donc des éléments de solidarisation au châssis du véhicule. Cette solidarisation peut être assurée à l'aide de deux ceintures de sécurité du véhicule, par l'intermédiaire d'une portion de sangles s'étendant depuis une extrémité de la nacelle jusqu'à une sangle de la ceinture de sécurité du véhicule. Le demandeur a notamment développé un dispositif, connu sous le nom de Fixauto®, permettant une solidarisation simple et efficace des deux extrémités de la nacelle aux sangles de ceintures de sécurité. US 2014/292049 montre une nacelle pour le transport d'un enfant en position allongée, destinée à être fixée par des moyens de solidarisation à un siège d'un véhicule automobile, ladite nacelle comprenant deux portions telles que, lorsque ladite nacelle est fixée audit siège: une première portion, qui porte les pieds de l'enfant, s'étend essentiellement au-dessus dudit siège et une deuxième portion, qui porte la tête de l'enfant, s'étend essentiellement au-delà dudit siège.

Un inconvénient de cette technique est qu'il existe un risque important que cette installation/solidarisation de la nacelle soit mal effectuée, par inadvertance ou mauvaise mise en œuvre des moyens prévus. Ce risque de mauvaises installations (« misuse » en anglais) introduit évidement une mise en danger de l'enfant transporté, notamment en cas d'accident ou de freinage brusque.

Pour pallier cet inconvénient, une autre technique de fixation s'est donc développée depuis la mise en œuvre du système Isofix®. Cette technique consiste soit à fixer directement la nacelle au véhicule par l'intermédiaire des pinces Isofix®, soit à fixer la nacelle sur une base, elle-même fixée au véhicule par le système Isofix®. L'utilisation de telles pinces Isofix® offre une sécurité de solidarisation accrue par rapport à un système d'attache mettant en œuvre les ceintures de sécurité du véhicule.

La fixation de la nacelle sur la base est généralement effectuée sur la portion de la nacelle portant les pieds de l'enfant, l'enfant étant installé de façon que sa tête soit éloignée des portières latérales du véhicule. Contrairement au système d'attache antérieur mettant en œuvre les ceintures de sécurité du véhicule, la nacelle n'est donc plus arrimée par ses deux extrémités au véhicule. Au contraire, une portion de la nacelle s'étend au-delà de la base. Un inconvénient de cette technique réside dans le fait qu'en cas de choc, la nacelle peut avoir tendance à se vriller, l'extrémité de la nacelle non - solidarisée à la base étant susceptible de se déformer sous l'effet du choc.

Afin de pallier cet inconvénient, il a été proposé de renforcer la structure de la nacelle. Cependant, ce renfort structurel se fait au détriment du poids, ce qui rend moins pratique le transport de l'enfant dans la nacelle, et notamment son installation dans le véhicule, ou son utilisation comme couffin.

En outre, en cas de choc frontal ou arrière, la nacelle, disposée le long de la banquette arrière du véhicule, peut avoir tendance à s'ouvrir, selon un phénomène de dévers.

Par conséquent, il existe un besoin de fournir une nacelle de transport d'un enfant, destinée notamment à être fixée dans un véhicule automobile, qui ne présente pas ces différents inconvénients de l'art antérieur. Plus précisément, il existe un besoin d'une telle nacelle qui permette d'assurer une sécurité maximale/optimale de l'enfant transporté pour un poids minimal.

### 3. Caractéristiques essentielles de l'invention

Ces objectifs, ainsi que d'autres qui apparaîtront par la suite, sont atteints selon l'invention à l'aide d'une nacelle pour le transport d'un enfant en position allongée, destinée à être fixée par des moyens de solidarisation à un siège d'un véhicule automobile. La nacelle comprend au moins deux portions telles que, lorsque la nacelle est fixée au siège:
- une première portion, qui porte les pieds de l'enfant, s'étend essentiellement au-dessus du siège ;
- une deuxième portion, qui porte la tête de l'enfant, s'étend essentiellement au-delà du siège.

Selon l'invention, la nacelle comprend une armature interne sur laquelle est montée une coque externe, l'armature interne présentant une structure asymétrique renforcée dans la deuxième portion.

Ainsi, l'invention repose sur une approche tout à fait nouvelle et inventive de la conception de nacelles pour le transport des enfants en voiture. En effet, les nacelles de l'art antérieur comprennent classiquement une coque, le plus souvent en matière plastique rigide, qui peut être recouverte sur ses parois internes de matériaux amortissants du type mousse ou polystyrène, puis habillée de tissu.

La présente invention s'affranchit au contraire de la présence d'une telle coque intégrale, à laquelle elle substitue un ensemble constitué d'une armature interne, destinée à assurer les fonctions de sécurité et de retenue de l'enfant, et d'une coque externe, plus légère, destinée à assurer le confort de l'enfant et l'esthétisme de la nacelle.

L'armature interne de la nacelle permet avantageusement de réduire le risque de vrille de la nacelle en cas de choc, induit par l'arrimage asymétrique de la nacelle au véhicule automobile. En outre, elle présente une structure asymétrique, renforcée au niveau de la deuxième portion, i.e. de la tête de l'enfant, afin de mieux protéger ce dernier en cas de choc, et d'empêcher le dévers de la nacelle.

La structure asymétrique de l'armature interne permet en outre d'atteindre un compromis optimal entre le poids de la nacelle et sa rigidité, seules les parties le nécessitant en termes de sécurité étant renforcées.

Selon un premier mode de réalisation, la nacelle est équipée, dans la première portion, de pinces de solidarisation permettant de fixer la nacelle à des boucles d'accrochage prévues à cet effet sur le siège. Ainsi, la nacelle est équipée de pinces Isofix®, disposées dans la première portion de la nacelle, et qui coopèrent, pour sa solidarisation au véhicule, avec des boucles d'accrochage prévues sur le siège du véhicule, de préférence le siège arrière latéral. Dans ce mode de réalisation, la fixation de la nacelle au véhicule se fait donc directement, sans embase. Cependant, un tel système de fixation est asymétrique, les pinces de solidarisation n'étant pas disposées aux deux extrémités de la nacelle, mais étant toutes deux disposées dans la première portion. Ainsi, les pinces Isofix® sont prévues sur la portion de la nacelle qui porte les pieds de l'enfant, et non à chacune des extrémités de la nacelle : par exemple, l'une des pinces est disposée au niveau de l'extrémité de la nacelle située contre la portière latérale du véhicule, et l'autre pince est disposée sensiblement au milieu de la nacelle, considérée dans le sens de la longueur. Ces deux pinces coopèrent avec les boucles d'accrochage prévues sur le siège latéral arrière du véhicule. On notera qu'un tel mode de réalisation n'est, à ce jour, pas conforme à la réglementation européenne en vigueur, qui n'autorise pas la fixation directe de pinces Isofix® sur la nacelle.

Selon un deuxième mode de réalisation, la nacelle est destinée à être fixée par les moyens de solidarisation à une embase solidaire du véhicule automobile, et, lorsque la nacelle est fixée à l'embase, la première portion s'étend essentiellement au-dessus de l'embase et la deuxième portion s'étend essentiellement au-delà de l'embase.

C'est alors l'embase qui est solidarisée au siège du véhicule par l'intermédiaire de pinces de solidarisation de type Isofix®.

Selon un mode de réalisation, l'armature interne comprend une poutre centrale longitudinale s'étendant au fond de la nacelle sur l'ensemble de sa longueur, et au moins deux montants s'étendant, dans la deuxième portion, de la poutre centrale longitudinale vers des bords supérieurs de la nacelle.

Ainsi, la poutre centrale longitudinale constitue l'épine dorsale de la nacelle, dont elle réduit donc fortement le risque de vrille en cas d'impact. Une telle épine dorsale s'étend de préférence sur toute la longueur de la nacelle, de façon à protéger l'enfant de la tête aux pieds. Afin de réduire le poids de la nacelle, elle peut également être limitée en longueur, mais doit s'étendre sur une partie substantielle de cette dernière pour remplir au mieux sa fonction sécuritaire.

En outre, dans la deuxième portion de la nacelle, généralement destinée à recevoir la tête de l'enfant, l'armature interne comprend au moins deux montants qui s'étendent du fond de la nacelle vers ses bords supérieurs, afin de rigidifier la structure de la nacelle dans cette zone qui n'est pas solidarisée à l'embase, et ainsi réduire les risques de dévers, i.e. les risques que la nacelle s'ouvre dans le sens de la longueur en cas de choc frontal ou arrière.

Selon un autre mode de réalisation, l'armature interne comprend également un arceau reliant l'extrémité supérieure des montants. Un tel arceau contribue à la rigidification de la structure de la nacelle, en reliant les montants les uns aux autres, et en évitant donc qu'ils s'écartent les uns par rapport aux autres.

Selon un mode de réalisation, l'armature interne comprend, dans la deuxième portion, cinq montants formant une structure de main destinée à soutenir et envelopper la tête de l'enfant.

La présence de cinq montants, s'étendant de la paroi de fond de la nacelle jusqu'à ses bords supérieurs, et reliés les uns aux autres par un arceau, offre un excellent compromis entre la rigidité nécessaire à une sécurité optimale de l'enfant et la réduction du poids nécessaire pour une utilisation et une manipulation aisées de la nacelle par les parents. Les montants forment comme les cinq doigts d'une main qui vient envelopper la tête de l'enfant et la protéger en cas d'accident.

Selon un mode de réalisation, les montants présentent une section en forme de « U », et l'arceau reliant l'extrémité supérieure des montants présente une section en forme de « L », de façon à présenter une rigidité satisfaisante mais un poids limité.

Selon un mode de réalisation, la poutre centrale longitudinale forme paroi de fond de la nacelle, et cette paroi de fond est ajourée dans au moins une des première ou deuxième portions. En effet, dans ces zones, la présence d'évidements dans la paroi de fond permet d'alléger la structure interne de la nacelle, sans affaiblir la fonction de sécurité et de retenue de l'enfant.

Selon un mode de réalisation, la paroi de fond présente au moins deux évidements séparés par au moins une traverse présentant une section en forme de « U ». Les évidements peuvent également être présents en plus grand nombre, en fonction de leur taille : un compromis entre leur nombre et leur taille permet de conserver une rigidité suffisante de la nacelle, tout en l'allégeant.

Selon un mode de réalisation, la ou les traverse(s) porte(nt) les moyens de solidarisation de la nacelle sur l'embase. Par exemple, des crochets présents sur l'embase s'encliquettent et se verrouillent autour des traverses.

L'invention concerne également un système pour le transport d'un enfant en position allongée dans un véhicule automobile, comprenant une embase, solidaire du véhicule (par exemple au moyen de pinces Isofix®) et une nacelle telle que décrite ci-avant. L'ensemble des caractéristiques décrites précédemment en relation avec la nacelle s'appliquent bien sûr également, seules ou en combinaison, à un tel système selon l'invention.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés parmi lesquels :
- la figure 1 est une vue en perspective de la nacelle selon un mode de réalisation de l'invention ;
- la figure 2 est une vue de côté représentant partiellement la nacelle de la figure 1 fixée sur une embase destinée à être solidarisée sur un siège d'un véhicule automobile ;
- la figure 3 est une vue éclatée montrant l'armature interne et la coque externe de la nacelle de la figure 1;
- la figure 4 est une vue en coupe longitudinale d'une variante de la nacelle de la figure 1 ;
- la figure 5 est une vue de détail, en perspective, montrant la forme particulière de la section des montants et de l'arceau de la nacelle de la figure 1 ; et
- la figure 6 est une vue en perspective de dessous de la nacelle de la figure 1 destinée à être solidarisée directement sur un siège d'un véhicule automobile.

### 5. Description détaillée d'un mode de réalisation de l'invention

L'invention propose donc une nacelle de transport d'un enfant en position allongée, notamment dans un véhicule. Pour ce faire, la nacelle peut être fixée sur une embase solidaire d'un siège du véhicule, et, dans cette configuration, la nacelle présente une première portion qui s'étend au-dessus de l'embase, par laquelle elle lui est solidarisée, et une deuxième portion qui s'étend au-delà de l'embase, et qui est donc libre. Cette deuxième portion est donc en position de porte-à-faux par rapport à l'embase.

Il est également envisageable de fixer la nacelle directement à un siège d'un véhicule par le biais de pinces Isofix®. Dans cette configuration, la fixation de la nacelle s'effectue au niveau d'une première portion de la nacelle qui s'étend au dessus du siège sur lequel la nacelle est fixée, la nacelle présentant également une deuxième portion qui s'étend au-delà du siège, et qui est donc libre. Cette deuxième portion est donc en position de porte-à-faux par rapport au siège.

Le principe général de l'invention repose sur une structure particulière de nacelle, qui comprend une armature interne, assurant les fonctions de retenue et de sécurité de l'enfant ; cette armature interne est recouverte d'une coque externe qui assure le confort de l'enfant, améliore l'esthétisme de la nacelle, et permet la mise en place de matériaux d'absorption. En outre, l'armature interne présente une structure asymétrique, en ce sens qu'elle est renforcée dans la deuxième portion, par rapport à la première portion.

La structure de l'armature interne est configurée, selon ce mode de réalisation, pour garantir une rigidité optimale de la nacelle et limiter ses déformations en cas de choc (lors d'une utilisation dans un véhicule). Cette structure particulière de la nacelle permet de garantir une sécurité optimale de l'enfant tout en présentant un poids minimal.

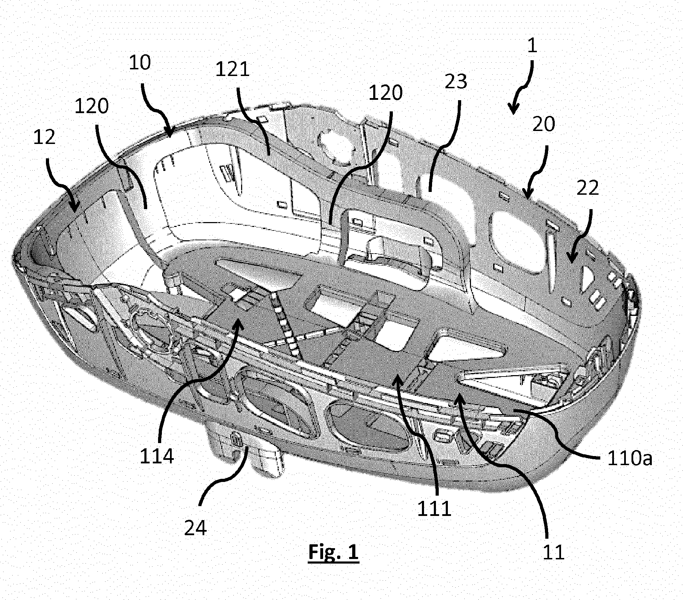

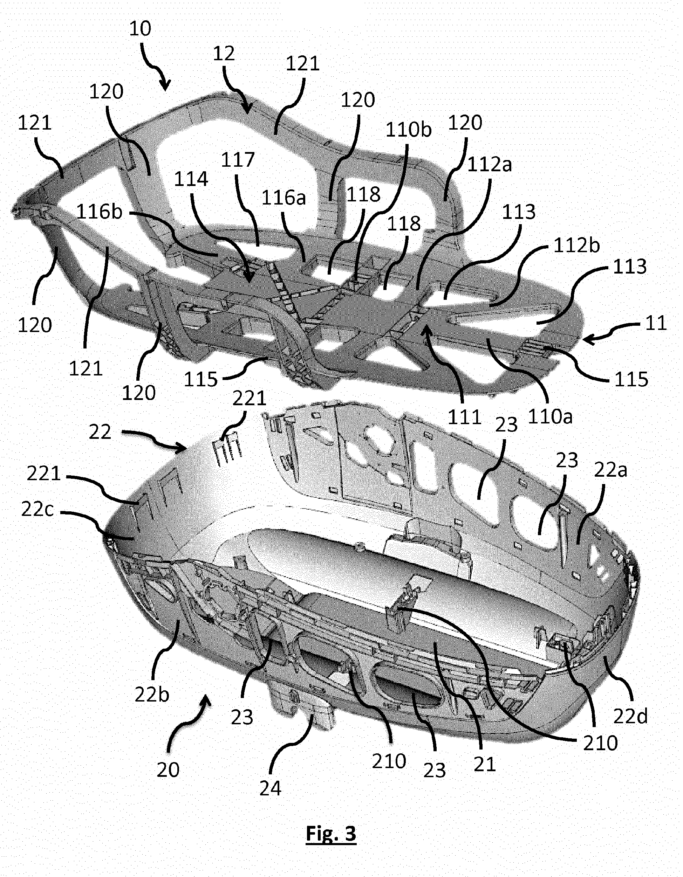

Les figures 1 et 3 illustrent un exemple de nacelle selon l'invention. La vue éclatée de la figure 3 montre les principaux éléments internes de la nacelle.

La nacelle 1 est constituée d'une armature interne 10 sur laquelle est montée une coque externe 20. L'armature interne 10 est fabriquée en un matériau rigide comme le Stamax (polypropylène renforcé avec de la fibre de verre) ou le PA GF30 (polymère renforcé avec de la fibre de verre), par exemple. Cette armature interne 10 est destinée à garantir la rigidité de la nacelle 1 de façon à limiter les déformations de cette dernière en cas de choc, notamment. L'armature interne 10 comprend une paroi de fond 11 et une paroi latérale 12.

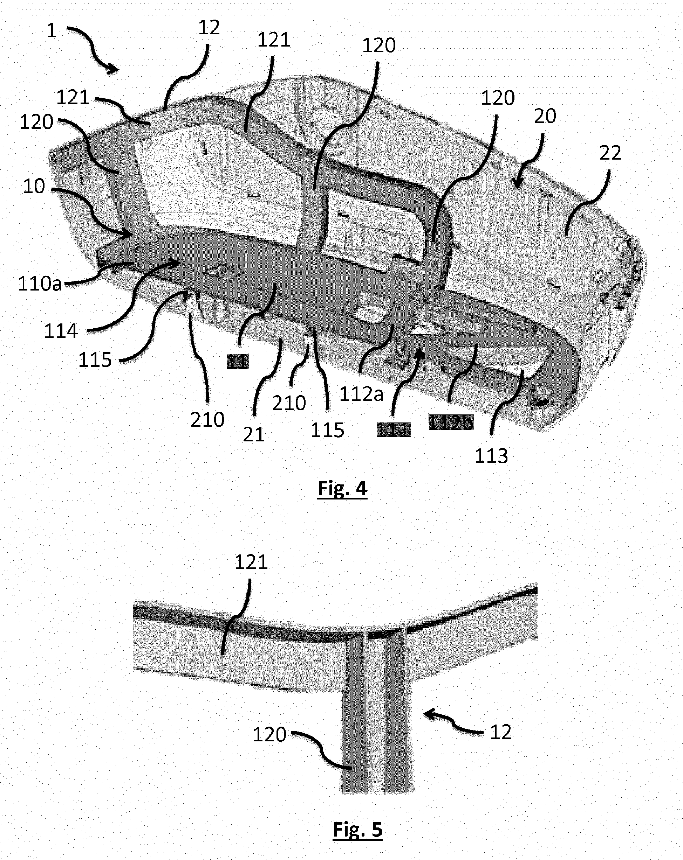

La paroi de fond 11 s'étend symétriquement par rapport à une poutre centrale longitudinale 110a (visible sur les figures 3 et 4) qui s'étend sur toute la longueur de l'armature interne 10.

La paroi de fond 11 comprend une première portion, dite première section, ou section inférieure, 111 qui est destinée à porter les membres inférieurs de l'enfant et une deuxième portion, dite deuxième section, ou section supérieure, 114 qui est destinée à porter la tête de l'enfant. Les première 111 et deuxième 114 sections présentent, dans ce mode de réalisation, des dimensions sensiblement identiques/égales.

La paroi de fond 11 s'étendant symétriquement par rapport à la poutre centrale longitudinale 110a, la description ci-dessous ne détaille qu'une moitié de la paroi de fond. On comprend bien évidemment que l'autre moitié de la paroi de fond 11 est symétriquement identique.

La première section 111 est ajourée, et comprend des traverses 112 qui s'étendent à partir de la poutre centrale longitudinale 110a vers les bords extérieurs de la paroi de fond 11, formant ainsi une pluralité d'ouvertures, ou lumières, 113. La poutre centrale longitudinale 110a et les traverses 112 sont sensiblement configurées en forme d'« arêtes de poisson », pour constituer l'épine dorsale de la nacelle. Dans cet exemple, la première section 111 comprend deux traverses 112a et 112b et trois lumières, ou évidements 113. Dans une variante, un nombre plus important de traverses 112, et donc de lumières 113, peut être mis en œuvre.

De façon similaire, la deuxième section 114 est aussi ajourée, et comprend des traverses 116 qui s'étendent à partir de la poutre centrale longitudinale 110a vers les bords extérieurs de la paroi de fond 11, formant ainsi une pluralité d'ouvertures, ou lumières, 117.

Dans cet exemple, la deuxième section 114 comprend une traverse 116a qui s'étend perpendiculairement à la poutre centrale longitudinale 110a et une traverse 116b qui s'étend de façon oblique par rapport à la poutre centrale longitudinale 110a. Les traverses 116a et 116b forment une unique lumière 117.

Dans une variante, un nombre plus important de traverses 116, et donc de lumières 117, peut être mis en œuvre.

Les première 111 et deuxième 114 sections sont délimitées par une traverse, appelée poutre centrale transversale, 110b qui s'étend de la poutre centrale longitudinale 110a vers les bords extérieurs de la paroi de fond 11. Cette poutre centrale transversale 110b s'étend perpendiculairement à la poutre centrale longitudinale 110a et forme avec chacune des traverses 116a et 112a une lumière 118.

Les traverses 112, 116, 110b présentent préférentiellement une section en forme de « U ». Cette section particulière des traverses 112, 116, 110b en complément de la forme en arête de poisson de la première section 111 garantit une rigidité élevée/importante de la paroi de fond 11, et augmente la résistance en torsion de cette paroi de fond 11.

La section des traverses 112, 116, 110b peut être de forme carrée dans une variante.

Les lumières 113, 117 et 118 formées entre les traverses 112, 116, 110b permettent de diminuer le poids de l'armature interne 10.

Dans une variante illustrée à la figure 4, la deuxième section 114 de la paroi de fond est pleine, c'est-à-dire que sa surface supérieure est homogène et ne présente pas d'ouverture/lumière. Son épaisseur est de préférence constante et comprise, par exemple, entre 2 et 3,5mm.

Les poutres centrales 110a, 110b et les traverses 112a, 112b, 116, 116b portent des moyens de fixation (non représentés) de la nacelle 1 à l'embase solidaire du siège du véhicule, sous la forme de crochets et/ou de barres de fixation, par exemple. De tels moyens de fixation sont connus et ne seront donc pas décrits plus en détail ici.

Les lumières 113, 117 et 118 formées entre les traverses 112, 116, 110b sont configurées pour permettre le passage des sangles du harnais de sécurité maintenant l'enfant dans la nacelle. Plus précisément, ces lumières 113, 117, 118 permettent le passage d'une extrémité du harnais destinée à être solidement fixée à l'armature interne de la nacelle.

La paroi de fond 11 est prolongée, essentiellement sur les bords de la deuxième section 114, par une paroi latérale 12 qui s'étend sensiblement perpendiculairement à la paroi de fond 111.

Cette paroi latérale 12 est formée de montants 120 courbes qui s'étendent verticalement à partir de la paroi de fond 10, vers les bords supérieurs de la nacelle. Ainsi, cette paroi latérale n'est pas pleine, mais ajourée de manière à limiter le poids de l'armature interne 10. Les montants 120 présentent une section en forme de « U » qui optimise leur rigidité. Ils sont disposés symétriquement par rapport à la poutre centrale 110 de la paroi de fond 10.

Dans cet exemple, la paroi latérale 12 met en œuvre six montants 120, c'est-à-dire trois montants disposés symétriquement de chaque côté de la poutre centrale 110. Comme illustré sur la figure 3, les montants 120 s'étendent préférentiellement dans le prolongement des traverses 112a, 116a et 116b.

Dans une variante, il est envisageable de mettre en œuvre cinq montants 120 (un montant central disposé dans le prolongement de la poutre centrale 110, et deux montants 120 de chaque côté de la poutre centrale).

Il est également envisageable de mettre en œuvre plus de six montants 120, ou un nombre plus réduit, par exemple deux ou trois.

Toutefois, il est préférable de choisir le nombre de montants 120 pour obtenir le meilleur compromis entre la rigidité de la structure et le poids de la nacelle 1.

Les montants 120 sont disposés autour de la deuxième section 114 de la paroi de fond 11 de manière à former, avec cette paroi de fond 11, une « main » qui soutient et englobe la tête de l'enfant. De la même façon qu'une « main humaine », les montants 120 situés les plus proches de la poutre centrale 110 présentent une hauteur/longueur plus élevée que ceux éloignés de la poutre centrale 110. Cette forme particulière permet une protection améliorée et un maintien optimal de l'enfant, en cas de choc notamment.

Un arceau, ou barre, 121 relie l'extrémité de chaque montant 120 de manière à former la paroi latérale 12. L'arceau présente une forme courbée, pour épouser les hauteurs différentes des montants 120. L'arceau 121 présente une section sensiblement en « U » qui permet de garantir une rigidité élevée de la paroi latérale 12 pour un poids optimal.

La configuration particulière de l'armature interne 10 permet de garantir à la nacelle 1 une rigidité et une résistance à la torsion importante. Plus particulièrement, cette armature interne 10 permet d'obtenir, lors d'un choc, une déformation maîtrisée.

La structure de l'armature interne 10, présentant une paroi de fond 11 et une paroi latérale 12 ajourées, contribue à sensiblement diminuer son poids.

La nacelle 1 comprend, en outre, une coque externe 20 fabriquée dans un matériau plus souple et plus léger que l'armature interne 10. Cette coque externe 20 est, par exemple, fabriquée en polypropylène (PP). Cette coque externe n'a pas de fonction de sécurité et de retenue de l'enfant, mais en assure le confort, et procure une certaine esthétique à la nacelle.

La coque externe 20 est une monocoque et comprend une paroi de fond 21 prolongée par une paroi périphérique 22 s'étendant sensiblement perpendiculairement à la paroi de fond 21. La coque externe 20 est destinée à être montée sur l'armature interne 10, qu'elle recouvre, et présente donc une forme correspondant à celle de l'armature interne 10.

La paroi périphérique 22 présente une hauteur sensiblement constante sur l'ensemble de la périphérie de la paroi de fond 21 de la coque externe 20. Cette paroi périphérique 22 permet un maintien optimal de l'enfant, et notamment de ses membres inférieurs.

La paroi périphérique 22 comprend deux bords latéraux 22a, 22b, un bord supérieur 22c situé au niveau de la tête de l'enfant, et un bord inférieur 22d situé au niveau des membres inférieurs de l'enfant.

Toujours dans un souci d'optimisation du poids global de la nacelle, cette coque externe 20 présente une pluralité d'évidements 23 disposés sur la paroi périphérique 22. Plus précisément, ces évidements 23 sont, dans ce mode de réalisation, disposés sur les bords latéraux 22a, 22b de la paroi périphérique 22. Ces évidements 23 représentent entre 5 et 20 % du volume de la paroi périphérique 22.

La coque externe 20 présente, sur sa surface extérieure, des moyens de fixations 24 situés sensiblement à mi-longueur des bords latéraux 22a, 22b. Ces moyens de fixation 24 sont aptes à fixer la nacelle sur d'autres dispositifs de puériculture tels qu'une poussette ou une chaise haute, par exemple.

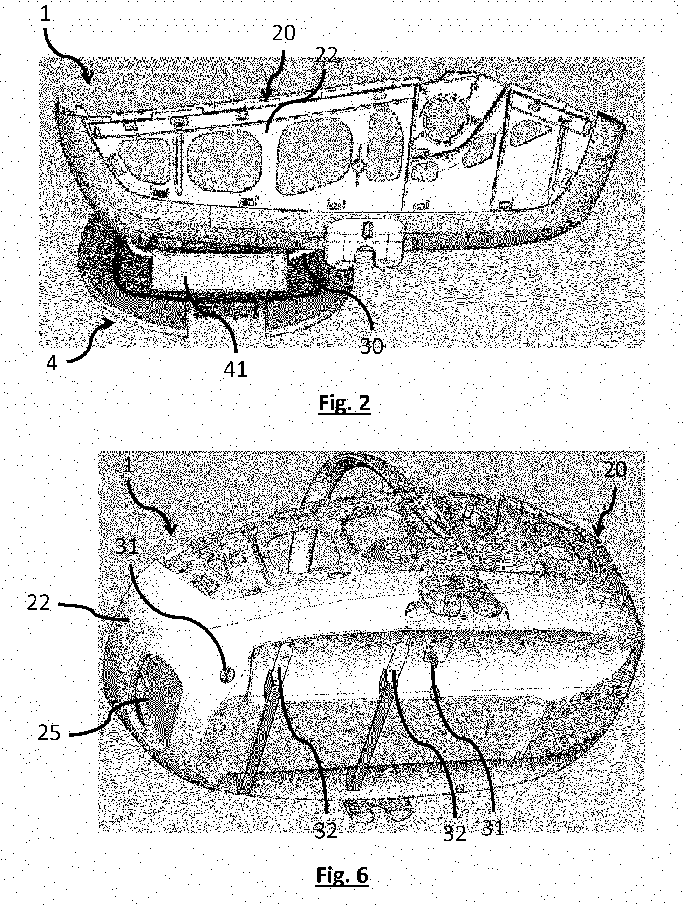

Comme illustré sur la figure 6, la nacelle 1 peut présenter, sur ses bords supérieur 22c et inférieur 22d, un logement 25 agissant telle une poignée afin de faciliter la transport manuelle de la nacelle par un utilisateur.

La paroi de fond 21 de la coque externe 20 est destinée à recevoir et à être solidarisée à la paroi de fond 11 de l'armature interne 10. Pour ce faire, la surface supérieure de la paroi de fond 21 de la coque externe 20 comprend des éléments de solidarisation 210 aptes à coopérer avec des éléments de solidarisation 115 correspondants portés par la surface inférieure de la paroi de fond 11 de l'armature interne 10.

De la même façon, la paroi périphérique 22 de la coque externe 20 comprend des éléments de solidarisation 221 (visibles sur la figure 3) aptes à coopérer avec des éléments de solidarisation correspondants (non visibles) portés par l'arceau 121 et les montants 120 de la paroi latérale 12 de l'armature interne 10.

Ces éléments de solidarisation sont destinés à solidariser et maintenir l'armature interne 10 et la coque externe 20 entres elles. Ces éléments de solidarisation se présentent sous la forme de clips.

Il est également envisageable de solidariser l'armature interne 10 et la coque externe 20 par vissage, par une soudure plastique ou de fabriquer l'armature interne 10 et la coque externe 20 en un monobloc par impression 3D, notamment.

Après assemblage/solidarisation de l'armature interne 10 et de la coque externe 20, le poids de la nacelle 1 est inférieur à 5,5 kg. Préférentiellement, le poids de la nacelle assemblée est de 3 kg.

### 6. Autres aspects et variantes

La figure 2 illustre la nacelle de l'invention selon un mode de réalisation consistant à fixer la nacelle 1 sur une embase 4 destinée elle-même à être fixée sur le siège d'un véhicule automobile (non représenté).

Pour ce faire, la nacelle 1 présente une paire de barres/tiges de fixation 30 qui sont solidaires des poutres centrales 110a, 110b et/ou des traverses 112a, 112b, 116, 116b de la paroi de fond 11. Plus précisément, ces tiges de fixation 30 sont situées dans la première portion 111 de la paroi interne 11, c'est-à-dire la portion portant les membres inférieurs de l'enfant.

Des lumières 31 (visibles sur la figure 6) sont ménagées sur la surface inférieure de la coque externe 20 afin de permettre le passage des tiges de fixation 30 vers l'embase 4.

Ces tiges de fixation 30 sont destinées à coopérer avec des moyens de fixation 41 situés sur la partie supérieure de l'embase 4 et comprenant, par exemple, des crochets (non représentés). On comprend bien évidemment que tout autre moyen, similaire aux tiges et aux crochets de fixation, peut être mis en œuvre ici pour fixer la nacelle 1 à l'embase 4.

Les tiges de fixation 30 ainsi que les crochets 41 sont configurés pour permettre la fixation de la nacelle selon deux positions, à savoir :
- une position dans laquelle la deuxième portion 114, i.e. la portion en porte-à-faux par rapport à l'embase 4, se situe à gauche de l'embase ; et
- une deuxième position laquelle la deuxième portion 114, i.e. la portion en porte-à-faux par rapport à l'embase 4, se situe à droite de l'embase.

L'embase 4 est destinée à être fixée au siège d'un véhicule automobile par le biais de pinces Isofix® (non visibles) situées à l'arrière de l'embase 4. Lorsque la nacelle est fixée sur l'embase, elle s'étend perpendiculairement au sens d'avance du véhicule. Le système de fixation par pinces Isofix® est connu et n'est donc pas décrit plus en détail ici.

Dans un autre mode de réalisation, illustré sur la figure 6, la nacelle 1 est destinée à être fixée directement au siège d'un véhicule automobile (non représenté). Pour ce faire, la surface inférieure de la nacelle 1 présente une paire de pinces Isofix® 32 qui s'étendent perpendiculairement à l'axe longitudinal de la nacelle 1. Ainsi, lorsque la nacelle 1 est fixée au siège d'un véhicule automobile, la nacelle s'étend perpendiculairement au sens d'avance de ce dernier.

Les pinces Isofix® 32 sont situées dans la première portion 111 de la paroi interne 11, c'est-à-dire la portion portant les membres inférieurs de l'enfant. Les deux pinces 32 coopèrent avec des boucles d'accrochage prévues sur le siège latéral arrière du véhicule.

Les pinces Isofix® 32 sont configurées pour permettre la fixation de la nacelle 1 au siège arrière d'un véhicule automobile sur la droite de la nacelle 1 (comme illustré sur la figure 6) ou bien sur la gauche de la nacelle 1 (non représenté).

## Revendications

1. Nacelle (1) pour le transport d'un enfant en position allongée, destinée à être fixée par des moyens de solidarisation à un siège d'un véhicule automobile, ladite nacelle (1) comprenant deux portions telles que, lorsque ladite nacelle est fixée audit siège :
- une première portion (111), qui porte les pieds de l'enfant, s'étend essentiellement au-dessus dudit siège ;
- une deuxième portion (114), qui porte la tête de l'enfant, s'étend essentiellement au-delà dudit siège,
**caractérisée en ce que** ladite nacelle (1) comprend une armature interne (10) sur laquelle est montée une coque externe (20), ladite armature interne (10) présentant une structure asymétrique renforcée dans ladite deuxième portion (114).

2. Nacelle selon la revendication 1, **caractérisée en ce qu'**elle est destinée à être fixée par lesdits moyens de solidarisation à une embase solidaire dudit véhicule automobile, et **en ce que**, lorsque ladite nacelle (1) est fixée à ladite embase, ladite première portion (111) s'étend essentiellement au-dessus de ladite embase et ladite deuxième portion (114) s'étend essentiellement au-delà de ladite embase.

3. Nacelle selon l'une quelconque des revendications 1 et 2, **caractérisée en ce que** ladite armature interne (10) comprend une poutre centrale longitudinale (110a) s'étendant au fond de ladite nacelle (1) sur l'ensemble de sa longueur, et au moins deux montants (120) s'étendant, dans ladite deuxième portion (114), de ladite poutre centrale longitudinale (110a) vers des bords supérieurs de ladite nacelle (1).

4. Nacelle selon la revendication 3, **caractérisée en ce que** ladite armature interne (10) comprend également un arceau (121) reliant l'extrémité supérieure desdits montants (120).

5. Nacelle selon l'une quelconque des revendications 3 et 4, **caractérisée en ce que** ladite armature interne (10) comprend, dans ladite deuxième portion (114), six montants (120) formant une structure de main destinée à soutenir et envelopper la tête de l'enfant.

6. Nacelle selon l'une quelconque des revendications 3 à 5, **caractérisée en ce que** lesdits montants (120) présentent une section en forme de « U ».

7. Nacelle selon la revendication 4, **caractérisée en ce que** ledit arceau (121) reliant l'extrémité supérieure des montants (120) présente une section en forme de « L ».

8. Nacelle selon l'une quelconque des revendications 3 à 7, **caractérisée en ce que** ladite poutre centrale longitudinale (110a) forme paroi de fond (11) de ladite nacelle (1), et **en ce que** ladite paroi de fond (11) est ajourée dans au moins une desdites première (111) ou deuxième (114) portions.

9. Nacelle selon la revendication 8, **caractérisée en ce que** ladite paroi de fond (11) présente au moins deux évidements (113, 117, 118) séparés par au moins une traverse (112, 116, 110b) présentant une section en forme de « U ».

10. Nacelle selon la revendication 9, **caractérisée en ce que** ladite au moins une traverse (112, 116, 110b) porte les moyens de solidarisation de la nacelle sur l'embase.

11. Nacelle selon la revendication 1, **caractérisée en ce qu'**elle est équipée, dans ladite première portion (111), de pinces de solidarisation permettant de fixer ladite nacelle (1) à des boucles d'accrochage prévues à cet effet sur ledit siège.

12. Système pour le transport d'un enfant en position allongée, comprenant une embase solidaire d'un véhicule automobile et une nacelle (1), selon l'une des revendications 1 à 11, destinée à être fixée par des moyens de solidarisation à ladite embase.

## Patentansprüche

1. Tragekorb (1) für den Transport eines Kindes in liegender Position, der dazu ausgebildet ist, mittels Befestigungsmitteln an einem Sitz eines Kraftfahrzeugs befestigt zu werden, wobei der Tragekorb (1) zwei Teile umfasst, so dass, wenn der Tragekorb an dem Sitz befestigt ist:
- ein erster Teil (111), der die Füße des Kindes trägt, sich im Wesentlichen oberhalb des Sitzes erstreckt;
- ein zweiter Teil (114), der den Kopf des Kindes trägt, sich im Wesentlichen über den Sitz hinaus erstreckt,
**dadurch gekennzeichnet, dass** der Tragekorb (1) einen inneren Rahmen (10) umfasst, auf dem eine äußere Schale (20) montiert ist, wobei der innere Rahmen (10) eine verstärkte asymmetrische Struktur in dem zweiten Teil (114) aufweist.

2. Tragekorb nach Anspruch 1, **dadurch gekennzeichnet, dass** er dazu ausgebildet ist, durch die Befestigungsmittel an einem an dem Kraftfahrzeug befestigten Basisträger befestigt zu werden, und dass, wenn der Tragekorb (1) an dem Basisträger befestigt ist, der erste Teil (111) sich im Wesentlichen über den Basisträger erstreckt und der zweite Teil (114) sich im Wesentlichen über den Basisträger hinaus erstreckt.

3. Tragekorb nach einem beliebigen der Ansprüche 1 und 2, **dadurch gekennzeichnet, dass** der innere Rahmen (10) einen zentralen Längsträger (110a), der sich am Boden des Tragekorbs (1) über dessen gesamte Länge erstreckt, und mindestens zwei Steigteile (120) umfasst, die sich in dem zweiten Teil (114) von dem zentralen Längsträger (110a) in Richtung von oberen Kanten des Tragekorbs (1) erstrecken.

4. Tragekorb nach Anspruch 3, **dadurch gekennzeichnet, dass** der innere Rahmen (10) auch einen Bügel (121) umfasst, der das obere Ende der Steigteile (120) verbindet.

5. Tragekorb nach einem beliebigen der Ansprüche 3 und 4, **dadurch gekennzeichnet, dass** der innere Rahmen (10) in dem zweiten Teil (114) sechs Steigteile (120) aufweist, die eine Handstruktur bilden, die dazu ausgebildet ist, den Kopf des Kindes zu stützen und zu umschließen.

6. Tragekorb nach einem beliebigen der Ansprüche 3 bis 5, **dadurch gekennzeichnet, dass** die Steigteile (120) einen "U"-förmigen Querschnitt aufweisen.

7. Tragekorb nach Anspruch 4, **dadurch gekennzeichnet, dass** der Bügel (121), der das obere Ende der Steigteile (120) verbindet, einen "L"-förmigen Abschnitt aufweist.

8. Tragekorb nach einem beliebigen der Ansprüche 3 bis 7, **dadurch gekennzeichnet, dass** der zentrale Längsträger (110a) eine Bodenwand (11) des Tragekorbs (1) bildet, und dass die Bodenwand (11) in mindestens einem des ersten (111) oder des zweiten (114) Teils perforiert ist.

9. Tragekorb nach Anspruch 8, **dadurch gekennzeichnet, dass** die Bodenwand (11) mindestens zwei Aussparungen (113, 117, 118) aufweist, die durch mindestens einen Querträger (112, 116, 110b) mit "U"-förmigem Querschnitt getrennt sind.

10. Tragekorb nach Anspruch 9, **dadurch gekennzeichnet, dass** der mindestens eine Querträger (112, 116, 110b) die Befestigungsmittel des Tragekorbs am Basisträger trägt.

11. Tragekorb nach Anspruch 1, **dadurch gekennzeichnet, dass** er in dem ersten Teil (111) mit Befestigungsklammern ausgestattet ist, die es ermöglichen, den Tragekorb (1) an den zu diesem Zweck auf dem Sitz vorgesehenen Befestigungsschlaufen zu befestigen.

12. System für den Transport eines Kindes in liegender Position, umfassend einen an einem Kraftfahrzeug befestigten Basisträger und einen Tragekorb (1) nach einem der Ansprüche 1 bis 11, der dazu ausgebildet ist, mittels Befestigungsmittel an dem Basisträger befestigt zu werden.

## Claims

1. Cradle (1) for transporting a recumbent child, intended to be attached via means for securing to a seat of a motor vehicle, said cradle (1) including two portions such that, when said cradle is attached to said seat:
- a first portion (111), which supports the feet of the child, extends substantially above said seat;
- a second portion (114), which supports the head of the child, extends substantially beyond said seat,
**characterised in that** said cradle (1) includes an inner frame (10) on which an outer shell (20) is mounted, said inner frame (10) having a reinforced asymmetrical structure in said second portion (114).

2. Cradle according to claim 1, **characterised in that** it is intended to be attached via said means for securing to a base secured to said motor vehicle, and **in that**, when said cradle (1) is attached to said base, said first portion (111) extends substantially above said base and said second portion (114) extends substantially beyond said base.

3. Cradle according to any one of claims 1 and 2, **characterised in that** said inner frame (10) includes a longitudinal central beam (110a) extending to the bottom of said cradle (1) over the whole of the length thereof, and at least two mounts (120) extending, in said second portion (114), of said longitudinal central beam (110a) to the upper edges of said cradle (1).

4. Cradle according to claim 3, **characterised in that** said inner frame (10) also includes a bar (121) connecting the upper end of said mounts (120).

5. Cradle according to any one of claims 3 and 4, **characterised in that** said inner frame (10) includes, in said second portion (114), six mounts (120) forming a hand structure intended to support and surround the head of the child.

6. Cradle according to any one of claims 3 to 5, **characterised in that** said mounts (120) have a U-shaped section.

7. Cradle according to claim 4, **characterised in that** said bar (121) connecting the upper end of the mounts (120) has an L-shaped section.

8. Cradle according to any one of claims 3 to 7, **characterised in that** said longitudinal central beam (110a) forms a bottom wall (11) of said cradle (1), and **in that** said bottom wall (11) has openings in at least one of said first (111) or second (114) portions.

9. Cradle according to claim 8, **characterised in that** said bottom wall (11) has at least two recesses (113, 117, 118) separated by at least one crossbar (112, 116, 110b) having a U-shaped section.

10. Cradle according to claim 9, **characterised in that** said at least one crossbar (112, 116, 110b) supports the means for securing the cradle on the base.

11. Cradle according to claim 1, **characterised in that** it is equipped, in said first portion (111), with securing clamps enabling to attach said cradle (1) to the fastening buckles provided for this purpose on said seat.

12. System for transporting a recumbent child, including a base secured to a motor vehicle and a cradle (1), according to one of claims 1 to 11, intended to be attached by means for securing to said base.
